Europäisches Patentamt

(19) European Patent Office

Office européen des brevets

(11) Veröffentlichungsnummer: **0 075 893**
**B1**

(12) **EUROPÄISCHE PATENTSCHRIFT**

(45) Veröffentlichungstag der Patentschrift:
06.03.89

(51) Int. Cl.⁴: **G 06 F 9/34**, G 06 F 9/30,
G 06 F 12/04

(21) Anmeldenummer: 82108855.6

(22) Anmeldetag: 24.09.82

(54) Schaltungsanordnung zum Ausrichten von Speicheroperanden für dezimale und logische Befehle.

(30) Priorität: 30.09.81 DE 3138897

(43) Veröffentlichungstag der Anmeldung:
06.04.83 Patentblatt 83/14

(45) Bekanntmachung des Hinweises auf die Patenterteilung:
06.03.89 Patentblatt 89/10

(84) Benannte Vertragsstaaten:
AT BE CH FR GB IT LI NL SE

(56) Entgegenhaltungen:
DE-A-3 048 675
US-A-3 440 615
US-A-3 916 388

IBM TECHNICAL DSCLOSURE BULLETIN, Band 19,
Nr. 1, Juni 1976, Seiten 61-64, New York, US; C.H.
NGAI et al.: "Destructive overlap detection
hardware"

(73) Patentinhaber: Siemens Aktiengesellschaft Berlin
und München, Wittelsbacherplatz 2, D-8000
München 2 (DE)

(72) Erfinder: Tielcke, Rolf, Dipl.- Ing., Becker-
Gundahl- Strasse 14c, D-8000 München 71 (DE)
Erfinder: Sabathil, Friedrich, Dr. Dipl.- Phys.,
Meilerweg 8, D-8024 Oberhaching (DE)

EP 0 075 893 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung bezieht sich auf eine Schaltungsanordnung zum Ausrichten von Speicheroperanden für dezimale und logische Befehle gemäß den Merkmalen des Oberbegriffs des Patentanspruchs 1.

Datenverarbeitungsanlagen der oberen Leistungsklasse arbeiten vielfach in sogenannter Fließbandtechnik, wobei die Befehlsverarbeitung mit Hilfe zweier Prozessoren in mehreren parallel arbeitenden Stufen durchgeführt wird. Diese Aufgabenverteilung geht so vor sich, daß ein Befehlsaufbereitungsprozessor im Vorgriff und parallel zur eigentlichen Befehlsausführung das Befehlslesen, die Befehlsinterpretation, die Operandenadreßrechnung und das Lesen eines Speicheroperanden durchführt, während ein Befehlsausführungsprozessor die eigentliche Befehlsausführung und die Abspeicherung der Ergebnisse im Registersatz oder im Puffer- bzw. Hauptspeicher übernimmt. Bei jeder Leseoperation des Zentralprozessors wird dabei zuerst im Pufferspeicher nachgesehen und, sofern die adressierte Information dort nicht vorhanden ist, erst dann auf den Hauptspeicher zugegriffen. Der Hauptspeicher überträgt dann jeweils vier 8 Byte lange Worte an den Pufferspeicher. Dieser Datenverkehr zwischen Pufferspeicher und Hauptspeicher sowie zwischen Zentralprozessor und Pufferspeicher wird jeweils über 8 Byte breite Datenwege durchgeführt.

Bei Lesezugriffen zum Pufferspeicher besteht nun insofern ein Problem, als die vom Zentralprozessor angeforderten Speicheroperanden nicht immer an der Doppelwortgrenze beginnen und auch nicht immer innerhalb eines 8 Byte breiten Speicherraums liegen, sondern unter Überschreitung der Doppelwortgrenze auf zwei benachbarte Speicherräume aufgeteilt sind mit der Folge, daß beim Lesen dieses Speicheroperanden zwei Lesezugriffe notwendig sind.

Die Anzahl der Fälle, die zwei Lesezugriffe erfordern, läßt sich jedoch verringern, wenn im Pufferspeicher in einer Zeile zwei oder auch mehrere Doppelwörter zwar nacheinander gespeichert, die in einer Zeile liegenden Doppelwörter aber gleichzeitig gelesen werden, so daß eine Byteauswahleinrichtung die jeweils benötigten Operandenbytes direkt auswählen und links oder rechtsbündig ausgerichtet bereitstellen kann, wobei freibleibende Byteplätze der Doppelwortbreite mit Nullen aufgefüllt werden. Lediglich bei auf zwei Zeilen des Pufferspeichers verteilten Bytefolgen ist dann noch ein zweiter Lesezugriff erforderlich.

In jedem Falle werden dem Befehlsausführungsprozessor an der Doppelwortgrenze ausgerichtete Operanden von Doppelwortbreite zugeführt und diese verarbeitet.

Andererseits decken sich die Schreibadressen für die vom Befehlsausführungsprozessor gelieferten Schreibdaten meistens nicht mit einer Doppelwortgrenze im Speicher. Die Schreibdaten müssen daher beim Einschreiben in den Speicher ebenfalls verschoben oder neu ausgerichtet werden, und gegenenfalls muß ein zweiter Schreibzyklus eingeschoben werden, wenn die einzuschreibenden Bytes der Schreibdaten verschiedenen Doppelwortbereichen im Speicher zuzuordnen sind.

Aus der DE-A-3 048 675 ist ein Datenverarbeitungssystem bekannt, bei dem das Lesen von eine Blockgrenze überschreitenden Daten in einem einzigen Lesezugriff möglich ist. Dazu weist das Datenverarbeitungssystem einen in Bänke aufgeteilten Pufferspeicher, sowie Einrichtungen zur Bestimmung von Datenlängen, zur Erfassung einer Blocküberschreitung von Daten und zur Bestimmung von entsprechenden Bankadressen auf. Beim Auslesen von Daten aus dem Pufferspeicher wird von der Einrichtung zur Erfassung einer Blocküberschreitung festgestellt, ob die auszulesenden Daten eine Blockgrenze überschreiten oder nicht. Bei einer Blocküberschreitung der gewünschten auszulesenden Daten werden anstelle der die Blöcke angebenden Adressen, Adressen einer ersten und zweiten Bank erzeugt. Diese beiden Bänke bilden zusammen den Pufferspeicher, aus dem die Daten in einem einzigen Zugriff ausgelesen werden können. Die aus beiden Bänken gelesenen Daten werden vor ihrer Übergabe an die Verarbeitungseinheit durch entsprechende Lageverschiebung ausgerichtet, wobei durch Überlagern einer Maske nicht zum gewünschten Datenblock gehörende Restdaten ausgeblendet werden. Beim Schreiben von Daten in den Speicher erfolgt keine entsprechende Behandlung der Daten, so daß gegebenenfalls zusätzliche Übertragungszyklen notwendig sind.

Aus der US-Patentschrift 3 916 388 ist die Verwendung von bidirektionalen Byteverschiebeeinrichtungen anstelle einer mikroprogrammgesteuerten und daher mehrere Arbeitszyklen erfordernden Ausrichtung bekannt. Hierbei ist für den Übertragungsweg vom Speicher zum Prozessor und umgekehrt, eine gemeinsame Schiebeeinrichtung für die Ausrichtung vorgesehen, deren Arbeitsbreite der Arbeitsbreite entspricht, so daß beim Schreiben über eine Doppelwortgrenze hinweg das Ergebnis- oder Quellenregister des Prozessors belegt bleibt, bis auch die restlichen Bytes in den Speicher übertragen werden können. Außerdem ist bei der Verarbeitung von die Doppelwortbreite überschreitenden Operanden keine Zusammenfassung von Bytes zweier aufeinanderfolgender Doppelworte für die Übertragung und Abspeicherung möglich, so daß gegebenenfalls zusätzliche Übertragungszyklen erforderlich werden.

Aufgabe der Erfindung ist es daher, die Rückausrichtung der vom Ausführungsprozessor in den Speicher zu übertragenden Daten so zu gestalten, daß bei universeller Nutzbarkeit der Rückausrichteeinrichtung das Ergebnis- oder Arbeitsregister möglichst frühzeitig wieder freigegeben und die Anzahl der benötigten Speicherzyklen für das Rückschreiben möglichst klein gehalten werden kann, so daß die Verarbeitunsleistung insgesamt gesteigert wird.

Die Aufgabe wird durch die Merkmale des Patentanspruchs 1 gelöst.

Danach weist das Rückausricht-Verschiebenetzwerk eine gegenüber dem Arbeitsregister verdoppelte Breite entsprechend der von zwei Doppelworten auf und neben einem Datenregister ist ein weiteres Register als Überlaufregister vorgesehen, das über die Doppelwortgrenze hinausgeschobene Bytes aufnimmt, so daß das Arbeitsregister unmittelbar nach Übergabe an diese Register freigegeben werden kann. Auch können durch die Zwischenspeicherung restlicher Operandenbytes im Überlaufregister bei längeren Operanden diese Bytes ohne weiteres mit nachfolgenden Operandenbytes für die Speicherung kombiniert und dadurch Übertragungszyklen eingespart werden.

Vorteilhafte Weiterbildungen des Erfindungsgedankens ergeben sich aus den in den Unteransprüchen angegebenen Merkmalen.

Im folgenden wird ein Ausführungsbeispiel der Erfindung anhand der Zeichnung näher erläutert. Dabei zeigen:

Fig. 1 den prinzipiellen Aufbau einer Schaltungsanordnung gemäß der Erfindung
Fig. 2 den Funktionsablauf für die Verarbeitung logischer Speicheroperanden
Fig. 3 den Funktionsablauf für die Verarbeitung dezimaler Speicheroperanden
Fig. 4 ein detaillierteres Schaltbild für die Byterückausrichtung in einer Schaltungsanordnung gemäß Fig. 1 für die Verarbeitung dezimaler Speicheroperanden.

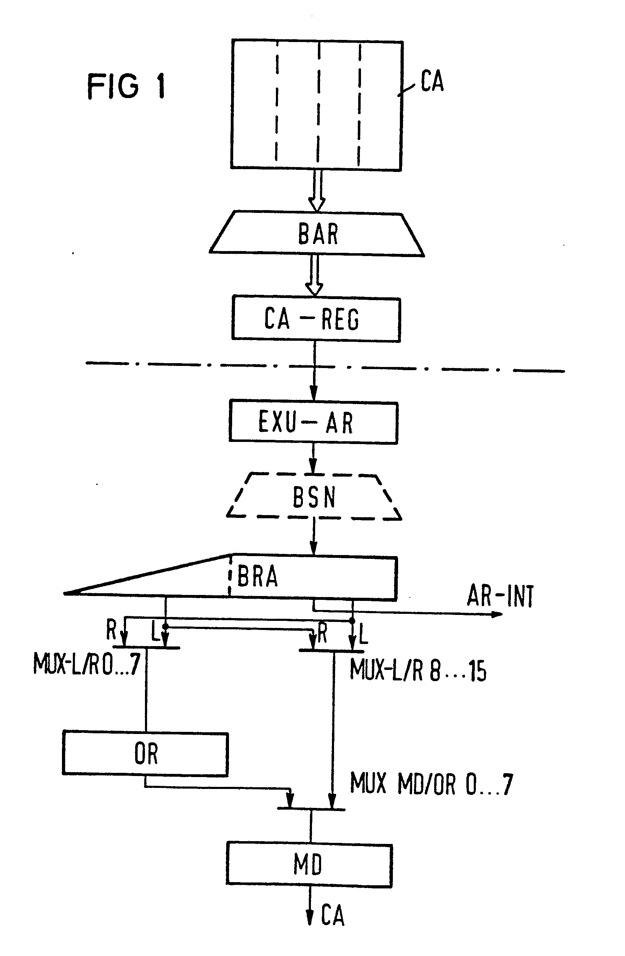

Die Fig. 1 zeigt einen Ausschnitt aus einer Datenverarbeitungsanlage, bei der die Aufgaben des Zentralprozessors zur Erzielung einer hohen Verarbeitungsgeschwindigkeit von zwei parallel arbeitenden Prozessoren, einem sogenannten Befehlsaufbereitungsprozessor und einem Befehlsausführungsprozessor wahrgenommen werden. In dem Befehlsaufbereitungsprozessor ist ein Pufferspeicher CA integriert, der z. B. aus mehreren Bänken besteht, die ihrerseits wiederum in Zeilen zu je 16 Byte unterteilt sind. Der Datenverkehr zwischen diesem Pufferspeicher CA und dem Befehlsausführungsprozessor EXU sowie mit dem in der Fig. 1 nicht dargestellten Hauptspeicher erfolgt über 8 Byte breite Datenwege. Bei jeder Leseoperation wird zunächst im Pufferspeicher nachgesehen und erst dann, wenn die adressierte Information dort nicht vorhanden ist, auf den Hauptspeicher zugegriffen. Der Hauptspeicher überträgt dann jeweils vier 8 Byte lange Worte an den Pufferspeicher, wo sie in einer Doppelzeile jeweils einer Pufferbank abgelegt werden. Gleichzeitig wird der adressierte 8 Byte-Block zum Zentralprozessor übertragen. Da der Speicheroperand meist nicht innerhalb eines 8 Byte-Speicherraumes, sondern unter Überschreitung der Doppelwortgrenze in zwei benachbarten Speicherräumen liegt, ist zwischen dem Pufferspeicher CA und dem ihm zugeordneten Ausgangsregister CA-REG ein Byte-Ausrichter BAR eingeschaltet, der die Speicheroperanden bei logischen Speicher-Speicherbefehlen - abgekürzt SS-Befehlen - linksbündig und bei dezimalen SS-Befehlen rechtsbündig an der Doppelwortgrenze ausrichtet. Ferner werden in nach der Ausrichtung nichtrelevante Bytestellen Nullen eingetragen. Dadurch lassen sich Verknüpfungen der Operanden im Befehlsverarbeitungsprozessor unabhängig von der Lage der Byteadresse, d. h. ohne Testabfragen durchführen. Um den Ergebnisoperanden schließlich wieder adreßgerecht in den Arbeitsspeicher einschreiben zu können, ist dem Arbeitsregister EXU-AR des Befehlsverarbeitungsprozessors EXU eine Rückausricht-Verschiebeeinheit BRA nachgeschaltet, die entsprechend der Schreib-Byteadresse Speicheroperanden für logische Befehle nach rechts und für Dezimalbefehle nach links verschiebt. Die Breite des Verschiebenetzwerkes BRA ist dabei so gewählt, daß über die Doppelwortgrenze hinausgeschobene Bytes nicht verloren gehen. Die Bytes des rückverschobenen Ergebnisoperanden werden dann jeweils in das Datenregister MD und soweit sie über die Doppelwortgrenze hinausgeschoben sind, in ein Überlaufregister OR übertragen. Dabei wird, je nachdem ob eine Links- oder Rechtsverschiebung vorgesehen ist, der rechte Teil der Verschiebeeinheit BRA dem Datenregister MD und der linke Teil dem Überlaufregister OR zugeordnet oder umgekehrt. Zur entsprechenden Umschaltung von Linksverschiebung auf Rechtsverschiebung sind mehrere, jeweils einer Bytestelle zugeordnete Multiplexer MUX-L/R 0...15 vorgesehen. Den Byteausgangen des Datenregisters MD sind ferner mehrere Multiplexer MUX-MD/OR 0...7 vorgeschaltet, die die Ausgange der einen Hälfte der erstgenannten Multiplexer, im dargestellten Beispiel die Ausgänge der Multiplexer MUX-L/R 8...15 und/oder die Byteausgänge des Überlaufregisters OR auf die entsprechende Bytestelle im Datenregister MD durchschalten. Die Links/Rechtsausrichtung der Leseoperanden im Byte-Ausrichter BAR des Pufferspeichers muß selbstverständlich mit der Rückausrichtung der Ergebnisoperanden im Befehlsverarbeitungsprozessor korrespondieren, und zwar derart, daß die Rückausricht-Verschiebeeinheit BRA bei links ausgerichteten Operanden auf Rechtsverschiebung und bei rechts ausgerichteten Operanden auf Linksverschiebung gestellt wird. Dies geschieht durch ein im logischen oder dezimalen Lesemikrobefehl enthaltenes Steuerbit S-L/R, das den Byteausrichter BAR auf Links- oder Rechtsverschiebung einstellt. Das gleiche Steuerbit SL/R steht im Schreibmikrobefehl und veranlaßt die entsprechende Rechts- oder Linksverschiebung in der Rückausricht-Verschiebeeinheit BRA. In der Schreibadresse werden ferner die drei niederwertigen Bit, d. h. die Bit 29, 30, 31 als Steuerbit S0, S1, S2 für die Shiftamplitude des Rückausricht-Verschiebenetzwerks BRA verwendet. Die jeweilige Bitkombination ergibt sich aus der nachfolgenden Tabelle I, wobei im Falle der Linksverschiebung eine durch das Steuerbit S-L/R veranlaßte invertierte Bitkombination in Betracht kommt.

**Tabelle I**

| Steuerbits S0, S1, S2 | 000 | 001 | 010 | 011 | 100 | 101 | 110 | 111 | |
|---|---|---|---|---|---|---|---|---|---|
| Rechtsverschiebung um | 0 | 1 | 2 | 3 | 4 | 5 | 6 | 7 | Byte |
| Linksverschiebung um | 7 | 6 | 5 | 4 | 3 | 2 | 1 | 0 | Byte |

Neben der Ausrichtung von Speicheroperanden für logische und dezimale SS-Befehle kann die Schaltung gemäß Fig. 1 auch für die Ausrichtung von Halbwortoperanden verwendet werden. Derartige Halbwortoperanden werden zunächst mittels des im Pufferspeicher CA vorgesehenen Byteausrichters BAR so ausgerichtet, daß sie im Byte 2 und 3 stehen. Die Byte 0 und 1 bilden das Vorzeichen, wobei bei positiven Operanden alle Bitstellen den Wert 0 und bei negativen Operanden den Wert 1 haben. Werden derartige Halbwortoperanden aus dem Pufferspeicher CA gelesen, dann erfolgt über einen speziellen Lesebefehl "Lesen-Halbwortoperand" die Ausrichtung nicht linksbündig an der Doppelwortgrenze, sondern nach Byte 2 und 3 mit automatischem Auffüllen der Vorzeichenstellen von Byte 0 und Byte 1 mit der jeweils höchstwertigen Bitstelle von Byte 2. Bei Schreibbefehlen erfolgt die Ausrichtung eines Haltwortoperanden dergestalt, daß der Operand nicht in der Bytestelle 0 sondern erst in der Bytestelle 2 beginnt. Die entsprechend modifizierte Beziehung zwischen den Steuerbit S0, S1, S2 und der Shiftamplitude ergibt sich aus der folgenden Tabelle II.

**Tabelle II**

| Modifizierte Steuerbits | 000 | 001 | 010 | 011 | 100 | 101 | 110 | 111 |
|---|---|---|---|---|---|---|---|---|
| Rechtsverschiebung um | - | - | 0 | 1 | 2 | 3 | 4 | 5 |
| Linksverschiebung um | 2 | 1 | 0 | - | - | - | - | - |

Durch ein der Rückausricht-Verschiebeeinheit BRA vorgeschaltetes, in der Fig. 1 gestrichelt gezeichnetes Bit-Verschiebenetzwerk BSN, dessen Shiftamplitude im Fall der Rückausrichtung von Speicheroperanden auf Null gestellt wird, kann das Rückausricht-Verschiebenetzwerk universell auch für prozessorinterne Schiebeoperationen im Bereich 0 bis 63 Bit vervendet werden. Für diesen Anwendungsfall wird die Shiftamplitude nicht durch die Steuerbits der Schreibadresse, sondern durch in speziellen Steuerregistern bereitgestellte Steuer-Informationen beeinflußt. In diesem Fall führt der Datenweg zu einem prozessorinternen Arbeitsregister AR-INT. Zusätzlich ist bei prozessorinternen Operandenverschiebungen vorgesehen, daß die Parität der einzelnen Bytes unabhängig von der Shiftamplitude stets neu generiert wird. Eine parallele Überwachung prüft jedoch, ob die Shiftamplitude ein Vielfaches von einem Byte ist. In diesem Fall wird die mitgeführte Parität mit der generierten Parität verglichen. Bei Nichtübereinstimmung wird ein Fehlersignal erzeugt. Dieses Verfahren hat den Vorteil, daß in laufzeitkritischen Datenpfad für das Paritätsbit keine Umschaltstufe im Falle eines Wechsels von Byteshift zum Bitshift durchlaufen werden muß. Das Paritätsbit im Datenpfad wird einheitlich dem Paritätsgenerator entnommen, während die Überwachung parallel über einen Vergleich arbeitet.

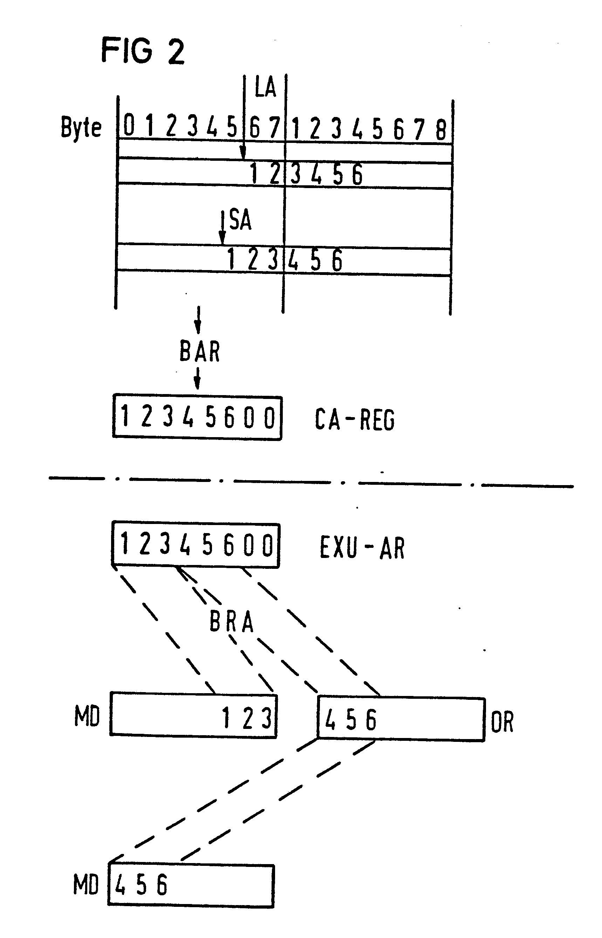

Im folgenden wird anhand der Fig. 2 die Verarbeitung von Speicheroperanden für logische SS-Befehle näher erläutert. Im Pufferspeicher CA befindet sich in der oberen Zeile ein Leseoperand mit einer Länge von 6 Byte, dessen Leseadresse LA auf Byte 6 im linken 8 Byte-Pufferspeicherbereich zeigt, so daß zwei Bytes des Operanden im linken und vier im rechten Bereich der Pufferspeicherzeile liegen. In der unteren Zeile ist ein Ergebnisoperand eingetragen, dessen Schreibadresse SA auf Byte 5 im linken 8 Byte-Pufferspeicherbereich zeigt. Die Verarbeitung erfolgt nun in der Weise, daß der Leseoperand - im vorliegenden Fall ist es ein Operand für einen logischen Befehl - mittels des Byteausrichters BAR linksbündig an der Doppelwortgrenze und dementsprechend in das Pufferspeicher-Ausgangsregister CA-REG übertragen wird. Der Befehlsverarbeitungsprozessor EXU übernimmt diesen ausgerichteten Operanden in einer ersten Elementaroperation in ein Arbeitsregister EXU-AR. Im Befehlsverarbeitungsprozessor EXU wird entweder gemäß dem in Fig. 2 dargestellten Beispiel ein gelesener Operand (bei Schiebebefehlen) oder ein über ein Rechenwerk verknüpfter Operand einer Rückausricht-Verschiebeeinheit BRA zugeführt, die den jeweiligen Operanden entsprechend seiner Schreibadresse SA nach rechts verschiebt und außerdem die Bytes 1, 2, 3 in das Datenregister MD überträgt (zweite Elementaroperation). Die über die Doppelwortgrenze nach rechts hinausgeschobenen Bytes 4, 5, 6 werden in einem Überlaufregister OR zwischengespeichert und in der dritten Elementaroperation in das Datenregister MD übertragen.

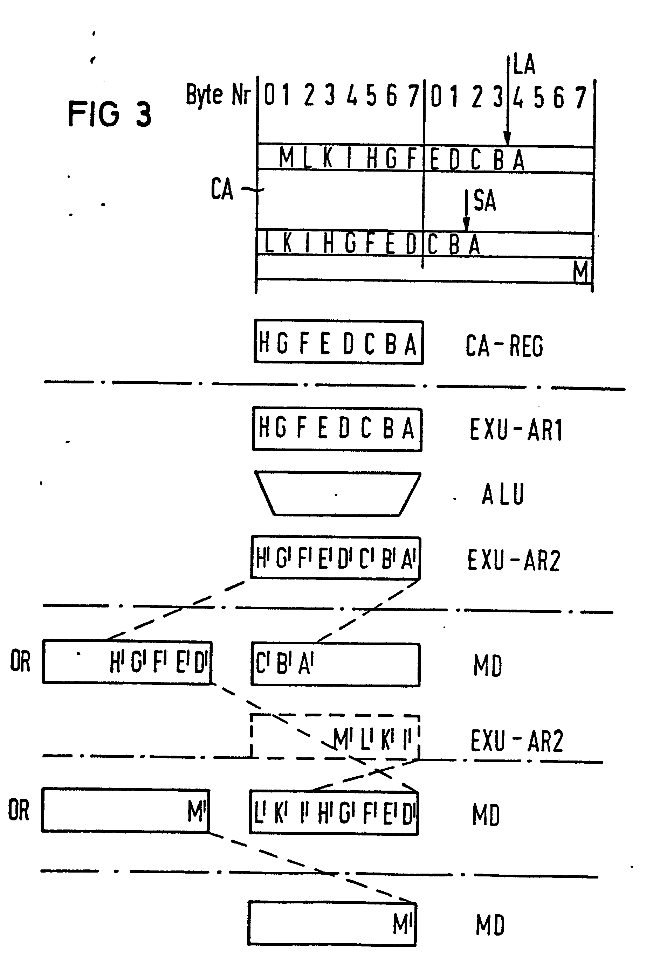

Die Fig. 3 zeigt den entsprechenden Ablauf bei Operanden für Dezimalbefehle. Der dargestellte Operand hat beispielsweise eine Länge von 12 Bytes, wobei die Leseadresse auf Byte 4 im rechten Pufferspeicherbereich zeigt. Entsprechend der Maßgabe, daß Operanden von Dezimalbefehlen mittels des Byteausrichters BAR rechtsbündig an der Doppelwortgrenze auszurichten sind, werden zunächst die ersten acht Bytes, d. h. die Bytes A...H in das Pufferspeicher-Ausgangsregister CA-REG übertragen. Nach Übernahme in das Arbeitsregister EXU-AR1 erfolgt nach analoger Beschaffung eines zweiten Operanden die Verknüpfung im Rechenwerk und anschliessend die Rückausrichtung des im Arbeitsregister EXU-AR2 bereitgestellten Ergebnisoperanden, wobei die Shiftamplitude entsprechend der Schreibadresse SA 5 Byte beträgt. Dadurch werden die Bytes A', B', C' in das Datenregister MD übernommen und die restlichen Bytes D', E', F', G', H' in das Überlaufregister OR geschoben. Als nächstes wird der Inhalt dieses Überlaufregisters OR in das Datenregister und gleichzeitig der restliche Teil des Operanden mit den Bytes I, K, L und M, die zwischenzeitlich in das Arbeitsregister übernommen worden waren, ebenfalls in das Datenregister MD übertragen bzw. zum Teil wieder im Überlaufregister OR - im vorliegenden Fall das letzte Byte M - zwischengespeichert. Zum Schluß wird auch dieses Byte M in das Datenregister geschrieben.

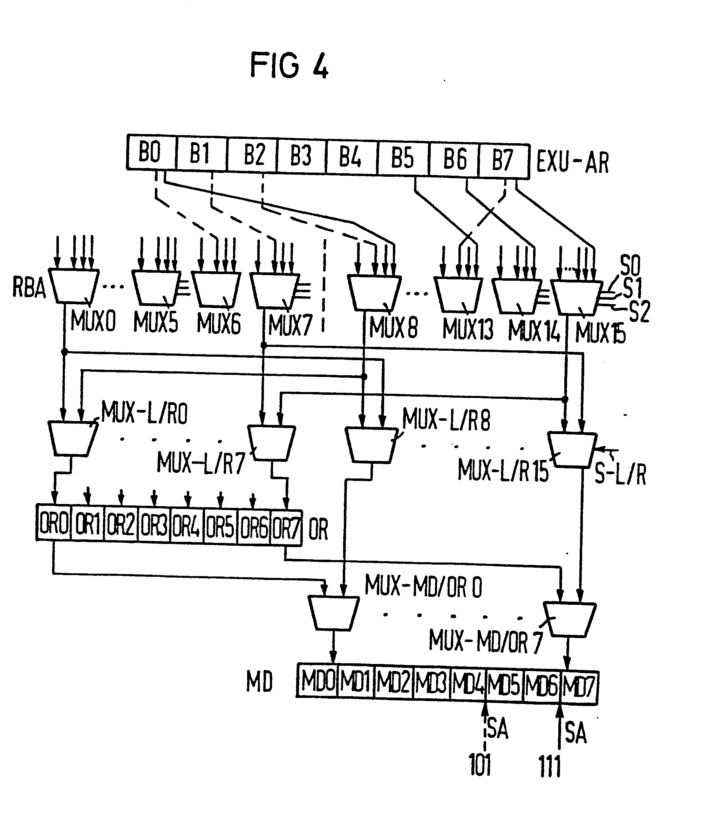

Die Fig. 4 zeigt ein detaillierteres Schaltbild für die Operandenrückausrichtung im Befehlsverarbeitungsprozessor EXU. Die Rückausricht-Verschiebeeinheit besteht im einzelnen aus insgesamt 16 Multiplexern MUX 0...15, deren Eingänge mit den Ausgängen der Bytestellen B0...B7 des Prozessor-Ausgangsregisters EXU-AR derart verknüpft sind, daß der im Arbeitsregister EXU-AR vorhandene Speicheroperand in Abhängigkeit von der durch die Steuersignale S0, S1, S2 festgelegten Shiftamplitude um entsprechend viele Bytes nach links oder rechts verschoben bzw. mit der Shiftamplitude 0 gerade durchgeschaltet wird. Das dargestellte Beispiel zeigt den Fall der Linksverschiebung für Dezimaloperanden, wobei die zwischen dem Arbeitsregister EXU-AR und der Rückausrichtverschiebeeinheit BRA durchgezogenen Leitungen für die Shiftamplitude 0 mit der Shiftadresse 111 und die gestrichelt gezeichneten Linien für die Shiftamplitude 2 Byte mit der Shiftadresse 101 gelten. Im Fall der Rechtsverschiebung werden die Multiplexer MUX 0...7 und die Multiplexer 8...15 mittels der Umschaltmultiplexer MUX-L/R 0...15 wechselweise vertauscht. Die Ausgänge der Umschaltmultiplexer MUX-L/R 0...7 sind mit je einem Byteeingang OR 0...7 des Überlaufregisters OR verbunden. Dessen Byteausgänge sowie die Ausgänge der Umschaltmultiplexer MUX-L/R 8...15 sind schließlich über je einen weiteren Multiplexer MUX-MD/OR 0...7 auf die jeweils entsprechenden Bytestellen MD 0...7 des Datenregisters MD durchschaltbar. Die Steuerung dieser Multiplexer erfolgt dabei individuell über die jeweilige Byteadresse.

## Patentansprüche

1. Schaltungsanordnung zum Ausrichten von Speicheroperanden für dezimale und logische Befehle in einer Datenverarbeitungsanlage, bestehend aus einem Aufbereitungsprozessor für Befehlslesen und Adreßrechnung, einem Verarbeitungsprozessor für die eigentliche Befehlsausführung, einem sowohl mit dem Hauptspeicher als auch mit dem Aufbereitungsprozessor über doppelwortbreite Schnittstellen verbundenen Pufferspeicher, mit einer im Pufferspeicher vorgesehenen bidirektionalen Byte-Verschiebeeinrichtung, die den jeweils dezimalen bzw. logischen Speicheroperanden in einem nachgeschalteten Pufferspeicher-Ausgaberegister mit Doppelwortbreite rechtsbündig bzw. linksbündig an der Doppelwortgrenze ausrichtet und eventuelle am linken bzw. rechten Ende freibleibende Byteplätze mit Nullen auffüllt und mit einem im Verarbeitungsprozessor vorgesehenen Rückausricht-Verschiebenetzwerk, das dem Arbeitsregister des Verarbeitungsprozessors nachgeschaltet ist und den jeweiligen Speicheroperanden entsprechend seiner Schreibadresse nach links bzw. nach rechts verschiebt, dadurch gekennzeichnet, daß das Rückausricht-Verschiebenetzwerk (BRA) die doppelte Breite des Arbeitsregisters (EXU-AR) aufweist, daß die Ausgänge des in Abhängigkeit von der Links- oder Rechtsverschiebung bis zur Doppelwortgrenze reichenden höherwertigen oder niederwertigen Bereichs über Multiplexer (MUX-L/R 8-15, MUX-L/R 0-7) mit den entsprechenden Byte-Eingängen eines nachgeschalteten Datenregisters (MD) und die Ausgänge des über die Doppelwortgrenze hinausreichenden niederwertigen oder höherwertigen Bereichs mit den entsprechenden Byte-Eingängen eines Überlaufregisters (OR) verbunden sind und daß die in das Überlaufregister (OR) geschobenen Teile des Operanden mit einem weiteren Schreibbefehl in entsprechend freie Stellen im Datenregister (MD) übertragbar sind.

2. Schaltungsanordnung nach Anspruch 1, dadurch gekennzeichnet, daß das Rückausricht-Verschiebenetzwerk (BRA) aus mehreren, jeweils einer der Bytestellen im Daten- und Überlaufregister (MD, OR) zugeordneten Multiplexern (MUX 0...15) besteht, deren jeweilige Eingänge mit den Byte-Ausgängen (B0...7) des Prozessor-Arbeitsregisters (EXU-AR) derart verknüpft sind, daß der im Arbeitsregister vorhandene Speicheroperand in Abhängigkeit von den einzelnen Multiplexern zugeführten Steuersignalen (S0, S1, S2) in byteweise gestuften Amplitudensprüngen nach links bzw. rechts verschiebbar bzw. geradeaus durchschaltbar ist, daß die Ausgänge der bei Linksverschiebung dem Überlaufregister zugeordneten Multiplexer (MUX 0...7) mit der jeweiligen Bytestelle (OR 0...7) dieses Überlaufregisters (OR) verbunden sind und daß die Ausgänge der übrigen Multiplexer (MUX 8...15) bzw. die Byteausgänge des Überlaufregisters (OR) in Abhängigkeit von der jeweiligen Byteadresse über je einen weiteren Multiplexer (MUS-MD/OR 0...7) auf die jeweils entsprechenden Bytestellen (MD 0...7) des Datenregisters (MD) durchschaltbar sind.

3. Schaltungsanordnung nach Anspruch 2, dadurch gekennzeichnet, daß die in zwei Gruppen aufgeteilten, jeweils dem Datenregister (MD) bzw. dem Überlaufregister (OR) zugeordneten Multiplexer (MUX 0...15) ausgangsseitig mittels je eines Umschaltmultiplexers (MUX-L/R 0...15) in Abhängigkeit von einem operandenspezifischen Steuersignal (S-L/R) für Links- oder Rechtsverschiebung gruppenweise vertauschbar sind, derart, daß bei Linksverschiebung die Ausgänge der Multiplexer (MUX 0...7) der einen Gruppe auf das Überlaufregister (OR) und die der anderen Gruppe (MUX 8...15) auf das Datenregister (MD) und bei Rechtsverschiebung entsprechend umgekehrt geschaltet werden.

**EP 0 075 893 B1**

**Claims**

1. Memory operand alignment circuit arrangement for decimal and logical instructions in a data processing system, consisting of a preprocessing processor for reading instructions and address calculation, a processing processor for the actual instruction execution, a buffer memory connected both to the main memory and to the preprocessing processor via double-word wide interfaces, having provided in the buffer memory a bidirectional byte shift device which right-justifies or left-justifies at the double-word boundary in each case the decimal or logical memory operands in a downstream buffer memory output register with double-word width and which fills with zeros any byte spaces remaining free at the left or right end and having provided in the processing processor a realignment shift network which is connected downstream of the working register of the processing processor and which shifts the respective memory operands to the left or to the right according to its write address, characterized in that the realignment shift network (BRA) has double the width of the working register (EXU-AR), in that the outputs of the higher-value or lower-value area extending up to the double-word boundary depending on the left or right shift are connected via multiplexers (MUX-L/R 8-15, MUX-L/R 0-7) to the corresponding byte inputs of a downstream data register (MD) and the outputs of the lower-value or higher-value area extending beyond the double-word boundary are connected to the corresponding byte inputs of an overflow register (OR), and in that the parts of the operands shifted into the overflow register (OR) can be transferred in a further write instruction into corresponding free spaces in the data register (MD).

2. Circuit arrangement according to Claim 1, characterized in that the realignment shift network (BRA) consists of a plurality of multiplexers (MUX 0 to 15) associated in each case with one of the byte positions in the data register and overflow register (MD, OR), the respective inputs of which multiplexers are connected to the byte outputs (B0 to 7) of the processor working register (EXU-AR) in such a manner that the memory operand present in the working register can be shifted to the left or right or can be connected straight through, respectively, depending on the control signals (S0, S1, S2) supplied to the individual multiplexers in byte-by-byte stepped amplitude jumps, in that the outputs of the multiplexers (MUX 0 to 7) associated during left shifting with the overflow register are connected to the corresponding byte position (OR 0 to 7) of said overflow register (OR), and in that the outputs of the remaining multiplexers (MUX 8 to 15) or the byte outputs of the overflow register (OR), respectively, can be connected through to the corresponding byte positions (MD 0 to 7) in each case of the data register (MD) depending on the respective byte address in each case via a further multiplexer (MUS-MD/OR 0 to 7).

3. Circuit arrangement according to Claim 2, characterized in that the multiplexers (MUX 0 to 15), which are divided into two groups and are in each case associated with the data register (MD) or the overflow register (OR), can be exchanged group-by-group on the output side by means of one switch-over multiplexer (MUX-L/R 0 to 15) in each case depending on an operand-specific control signal (S-L/R) for left or right shifting, in such a manner that with left shifting the outputs of the multi-plexers (MUX 0 to 7) of one group are switched to the overflow register (OR) and those of the other group (MUX 8 to 15) are are switched to the data register (MD), and with right shifting switching is correspondingly vice versa.

**Revendications**

1. Montage pour aligner des opérandes de mémoire pour des instructions décimales et logiques dans une installation de traitement de données, constitué par un processeur d'édition pour la lecture d'instructions et le calcul d'adresses, un processeur de traitement pour l'exécution proprement dite des instructions, une mémoire tampon reliée aussi bien à la mémoire principale qu'au processeur d'édition par l'intermédiaire d'interfaces possedant une largeur de mot double, un dispositif de transfert bidirectionnel d'octets, qui est prévu dans la mémoire tampon et qui aligne à droite ou à gauche au niveau de la limite de mot double les opérandes décimaux et logiques respectifs de mémoire dans un registre de sortie de la mémoire tampon, branché en aval et possédant une largeur de mot double, et remplit d'éventuels emplacements d'octets restant libres à l'extrémité de gauche ou de droite, par des zéros, et un réseau de décalage d'alignement arrière, qui est prévu dans le processeur de traitement et est branché en aval du registre de travail du processeur de traitement et décale vers la gauche ou vers la droite les opérandes respectifs de mémoire, conformément à son adresse d'enregistrement,
caractérisé par le fait que le réseau (BRA) de décalage d'alignement arrière possède le double de la largeur du registre de travail (EXU-AR), que les sorties de la zone de poids supérieur ou de poids inférieur, qui s'étend en fonction du décalage vers la gauche ou vers la droite jusqu'à la limite du mot double, sont reliées par l'intermédiaire de multiplexeurs (MUX-L/R 8-15, MUX-L/R 0-7), aux entrées correspondantes d'octets d'un registre de données (MD) branché en aval et que les sorties de la zone de poids inférieur ou de poids supérieur, qui s'étendent au-delà de la limite de mot double, sont reliées aux entrées d'octets correspondantes d'un registre de dépassement de capacité (OR), et que les parties, transférées dans le registre de dépassement de capacité (OR), de l'opérande peuvent être transférées, au moyen d'une autre instruction d'enregistrement, en des emplacements libres correspondants du registre de données (MD).

2. Montage suivant la revendication, caractérisé par le fait que le réseau (BRA) de décalage d'alignement

6

arrière est constitué par plusieurs multiplexeurs (MUX 0...15), qui sont associés chacun à l'un des emplacements d'octets dans le registre de données et dans le registre de dépassement de capacité (MD, OR) et dont les entrées respectives sont combinées aux sorties d'octets (B0...7) du registre de travail (EXU-AR) du processeur, de telle sorte que l'opérande de mémoire, présent dans le registre de travail, peut être décalé vers la gauche ou vers la droite ou être transmis directement selon des sauts d'amplitude échelonnés octet-par-octet, en fonction de signaux de commande (S0, S1, S2) envoyés aux différents multiplexeurs, que les sorties des multiplexeurs (MUX 0...7), associées au registre de dépassement de capacité lors du décalage vers la gauche, sont reliées à l'emplacement d'octets respectif (OR, 0...7) de ce registre de dépassement de capacité (OR), et que les sorties des autres multiplexeurs (MUX 8...15) ou les sorties d'octets du registre de dépassement de capacité (OR) peuvent être inter-connectées, en fonction de l'adresse d'octet respective, par l'intermédiaire d'un autre multiplexeur respectif (MUS-MD/OR 0...7), aux emplacements d'octets respectivement correspondants (MD 0...7) du registre de données (MD).

3. Montage suivant la revendication 2, caracterisé par le fait que les multiplexeurs (MUX 0...15), répartis en deux groupes et associés respectivement au registre de données (MD) ou au registre de dépassement de capacité (OR), peuvent être permutés par groupes, côté sortie, au moyen de multiplexeurs respectifs de commutation (MUX-L/R 0...15), en fonction d'un signal de commande (S-L/R) spécifique pour l'opérande, pour le décalage vers la gauche ou vers la droite, de telle sorte que, dans le cas d'un décalage vers la gauche, des multiplexeurs (MUX...7) d'un groupe sont raccordés au registre de dépassement de capacité (OR) et les sorties de l'autre groupe (MUX M8...15) sont raccordés au registre de données (MD) et que, dans le cas d'un décalage vers la droite, la commutation s'effectue de façon correspondante d'une manière inverse.

FIG 1

# FIG 2

Byte | 0 1 2 3 4 5 | 6 7 | 1 2 3 4 5 6 7 8

LA

1 2 | 3 4 5 6

SA

1 2 3 | 4 5 6

BAR

| 1 2 3 4 5 6 0 0 |  CA – REG

| 1 2 3 4 5 6 0 0 |  EXU – AR

BRA

MD |        1 2 3 |     | 4 5 6       | OR

MD | 4 5 6     |

# FIG 3

# FIG 4